# EUROPÄISCHE PATENTSCHRIFT

(11) **EP 2 433 110 B1**
(45) Veröffentlichungstag und Bekanntmachung des Hinweises auf die Patenterteilung: **29.07.2015**
(21) Anmeldenummer: 10720599.9
(22) Anmeldetag: 18.05.2010
(51) Int. Cl.: G01M 13/04, F16C 33/14, G01B 5/02

(54) **VERFAHREN UND VORRICHTUNG ZUR ÜBERSTANDSMESSUNG AN LAGERSCHALEN**
METHOD AND DEVICE FOR MEASURING THE PROTRUSION OF BEARING SHELLS
PROCÉDÉ ET DISPOSITIF DE MESURE DU DÉBORD DE COUSSINETS DE PALIER

(30) Priorität: 19.05.2009 DE 102009003231
(43) Veröffentlichungstag der Anmeldung: 28.03.2012
(73) Patentinhaber: Federal-Mogul Wiesbaden GmbH, 65201 Wiesbaden (DE)
(72) Erfinder: HALLER, Andreas, 65375 Oestrich-Winkel (DE); GROOTEBOER, Thomas, 55270 Essenheim (DE)
(74) Vertreter: Hoffmann Eitle
(86) Internationale Anmeldenummer: PCT/EP2010/056792
(87) Internationale Veröffentlichungsnummer: WO 2010/133579

(56) Entgegenhaltungen:
- DE-A1- 3 435 245
- US-A- 4 610 095

## Beschreibung

### TECHNISCHES GEBIET

Die Erfindung betrifft ein Verfahren und eine Vorrichtung zum Bestimmen eines Überstands an Lagerschalen.

### STAND DER TECHNIK

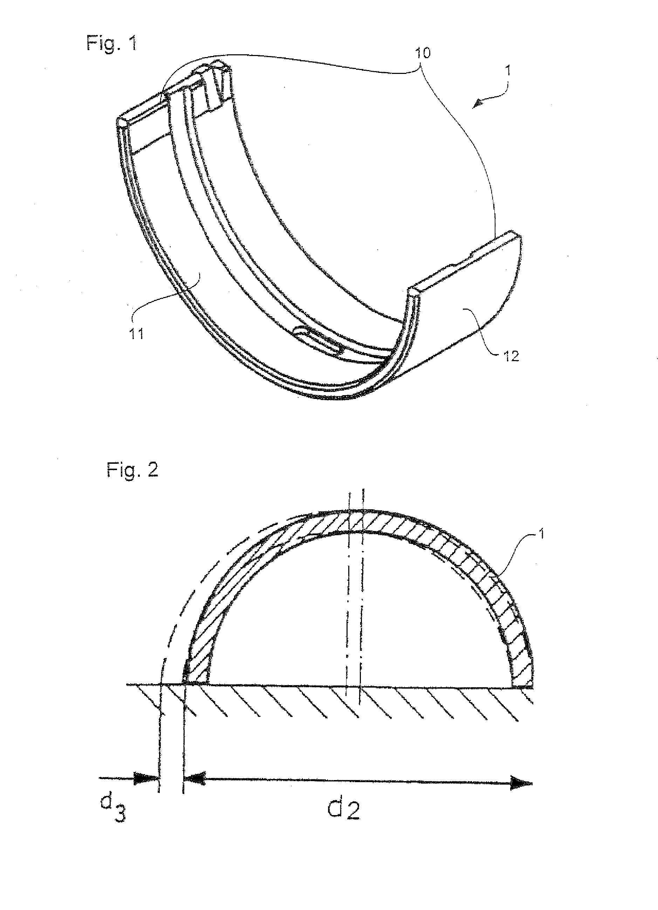

Fig. 1 zeigt eine Lagerschale 1, die mit einer Gleitfläche 11, einem Lagerrücken 12 und Teilflächen 10 vorgesehen ist. In der Figur sind in der Gleitfläche eine Schmiernut und Schmieröffnungen dargestellt. Die gezeigte Lagerschale 1 kann beispielsweise als Pleuellager verwendet werden.

Die Lagerschale 1 weist üblicherweise eine Spreizung d₃ auf, wie es in Fig. 2 gezeigt ist, d.h. der Durchmesser der Lagerschale 1, gemessen über die Teilflächen, ist größer als der Lagerschalendurchmesser d₂, wenn die Lagerschale (1) in eine Gehäuseaufnahme eingepasst ist. Dadurch ergibt sich bei der Montage eine gute Anlage an die Gehäusewand, wodurch ein Herausfallen oder Verdrehen der Lagerschale 1 verhindert wird. Der Radius der Lagerschale 1 im eingebauten Zustand, d.h. ohne Spreizung, wird als Q-Maß bezeichnet.

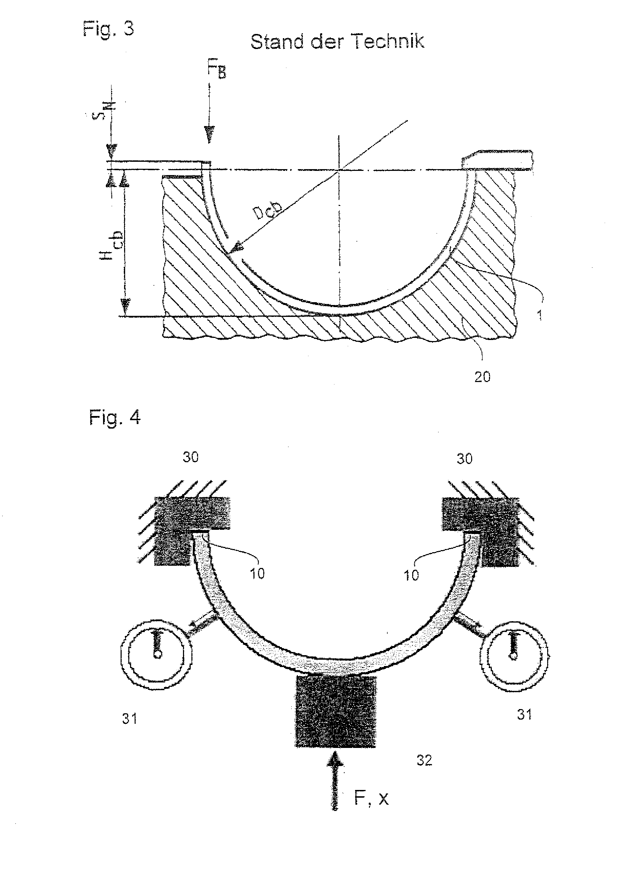

Ferner weist die Lagerschale 1 einen sogenannten "Überstand" auf. In Fig. 3 ist der Überstand mit S_{N} bezeichnet. Die Umfangslänge der Lagerschale ist um den Überstand S_{N} größer als die Umfangslänge der Gehäuseaufnahme. Beim Einbau der Lagerschale 1 wird die Umfangslänge des Lagers elastisch verkürzt. Der dabei verursachte Anpressdruck sorgt für den korrekten Sitz des Lagers. In Fig. 3 ist die Lagerschale 1 in ein Messgesenk 20 eingepasst. Auf das Messgesenk bezogen, bezeichnet der Überstand S_{N}, als Hauptmerkmal der Lagerschale 1, die Länge, die das Umfangsmaß der Lagerschale 1 das Messgesenks 20 überschreitet, nachdem die Lagerschale 1 in das Messgesenk 20 mit einer lagerspezifischen Beaufschlagungskraft F_{B} eingepresst wurde. D_{cb} bezeichnet den Prüfaufnahmedurchmesser des Messgesenks. Da aus prozesstechnischen Gründen dieses Hauptmerkmal nicht prozesssicher hergestellt werden kann, muss es entsprechend den Zeichnungsvorgaben geprüft werden. Typische Sollwerte des Überstands betragen 50 bis 150 µm mit einer Toleranz von 10 bis 30 µm.

Gemäß dem in Fig. 3 gezeigten Verfahren aus dem Stand der Technik wird die Lagerschale 1 in das lagerspezifische Messgesenk 20 unter Aufbringung einer festgelegten Einpresskraft mit definierter Auffahrgeschwindigkeit eingepresst. Dabei wird Formschluss mit dem massiv und steif ausgestalteten Gesenk 20 angestrebt. Die über den Rand des Messgesenks überstehende Länge - der Überstand S_{N} - der Lagerschale 1 wird taktil oder berührungslos gemessen.

Das beschriebene Verfahren erfordert eine hohe Genauigkeit des Messgesenks und für jeden Lagerschalentyp ein eigenes Messgesenk. Ferner können sich Reibungseinflüsse nachteilig auf das Messergebnis und die Beschaffenheit der Lagerschale auswirken.

Andere Verfahren oder Vorschläge aus dem Stand der Technik betreffen die Umfangsmessung mit Hilfe von über den Lagerrücken gespannte Messbänder oder das Abfahren des Lagerrückens mit Hilfe eines Reibrades. Hierbei wirken sich eine mögliche Dehnung der Messbänder oder ein möglicher Schlupf des Reibrades nachteilig auf das Messergebnis aus. Die Abnutzung der Messgeräte wirkt sich nachteilig auf das Messergebnis aus.

Die beschriebenen Verfahren benötigen vergleichsweise große Zykluszeiten. Es besteht ein Bedürfnis nach einem wirtschaftlichen Prüfverfahren, das ohne lagerspezifisches Messgesenk mit einer Zykluszeit von weniger als 1 s eine reproduzierbare, vergleichbare und rückführbare Messung des Überstands für einen Toleranzbereich von 10 bis 30 µm ermöglicht.

Die DE 34 35 245 A1 beschreibt ein Verfahren zur Feststellung des lastfreien Überstandswerts einer Lagerschale. Dazu wird die elastische Verkürzung des Überstands in Abhängigkeit einer auf eine Teilfläche der Lagerschale aufgebrachten Prüfkraft gemessen Die US4610095 offenbart ein anderes Verfahren zur Feststellung des lastfreien Überstandswerts einer Lagerschale.

### ZUSAMMENFASSUNG DER ERFINDUNG

Eine Aufgabe der Erfindung besteht darin, ein Verfahren und eine Vorrichtung zur Bestimmung des Überstands an Lagerschalen bereit zu stellen, die eine verbesserte Effizienz aufweisen.

Die Aufgabe wird mit einem Verfahren gemäß dem Anspruch 1 und einer Vorrichtung gemäß dem Anspruch 9 gelöst.

Mit dem erfindungsgemäßen Verfahren wird der Überstand aus einer elastischen Verformung der Lagerschale unter Aufbringung einer Prüfkraft bestimmt. Dazu wird die Lagerschale an mehreren Lagerungspunkten eingespannt. Das Einspannen kann hierbei sowohl an diskreten Punkten als auch entlang von Lagerabschnitten erfolgen. In einem darauffolgenden Schritt werden eine oder mehrere Prüfkräfte auf zumindest einen Punkt oder zumindest einen Bereich der Lagerschale so aufgebracht, dass die Lagerschale radial elastisch verformt wird. Bei der Verformung oder nach der Verformung wird die Verschiebung ausgewählter Messpunkte der Lagerschale in radialer Richtung gemessen. Aus der Verformung der Lagerschale lässt sich der Überstand bestimmen. Indem die Lagerschale an diskreten Punkten oder an bestimmten Bereichen eingespannt wird, kann auf ein Messgesenk, das im Wesentlichen den gesamten Umfang abdeckt, verzichtet werden. Dadurch werden die oben genannten Nachteile, die mit der Verwendung eines Messgesenks zusammenhängen, gelöst. Die Messung der Verformung kann berührungslos und/oder taktil erfolgen. Die Messung kann ferner am Lagerrücken (Mantelfläche) und/oder auf der Gleitfläche (Innenfläche) erfolgen. Es wird demnach eine radiale Formänderung der Lagerschale unter einer vorgegebenen Belastung ermittelt. Durch den Verzicht auf das Messgesenk sinken Kosten für Messwerkzeuge. Die Zykluszeit für die Messung kann mit weniger als 0,75 s realisiert werden und halbiert sich damit zum oben beschriebenen Stand der Technik. Dadurch ist der Einsatz des Prüfverfahrens im Prozess unmittelbar nach dem Erzeugen des Überstands (durch Umformen mit einer Zykluszeit von ca. 0,8 s) möglich. Die bei der Messung benötigten auftretenden Kräfte sind um einen Faktor 2-10 geringer als bei dem obigen Verfahren mit Verwendung eines Messgesenks. Die Auslegung der Prüfmaschine kann entsprechend kleiner und kostengünstiger werden. Vorzugsweise werden die Prüfkräfte gemäß einem zeitlich gesteuerten Kräfteverlauf aufgebracht und/oder wird der zeitliche Verlauf der Verformung gemessen, um die Genauigkeit der Überstandsbestimmung zu verbessern.

Vorzugsweise wird der zu bestimmende Überstand auf der Basis eines Formänderungsmodells ermittelt. Der Überstand lässt sich dann durch Vergleich mit dem Formänderungsmodell oder durch Berechnen aus dem Formänderungsmodell bestimmen.

Das Formänderungsmodell kann beispielsweise ein theoretisches Modell sein, aus dem sich aus der Verformungscharakteristik der Überstand berechnen lässt. Das tatsächliche Umformungsverhalten der Lagerschale hängt neben den Materialkennwerten, der Topologie und anderen Parametern des Gleitlagers auch und insbesondere vom Überstand ab. Aus diesem Grund lässt sich auf der Basis des Umformungsverhaltens der Überstand berechnen. Neben einem analytischen Modell kann das Formänderungsmodell empirisch anhand einer Serie von Meisterschalen oder adaptiv aus Vergleichsmessungen an Produktionsteilen oder aus einer Mischung der verschiedenen Modelle ermittelt werden. Ein geeignetes Modell zur Bestimmung des Überstands der Lagerschale muss in erster Linie in Abhängigkeit der messbaren Formänderung unter gegebenen oder ermittelten Kräften (quasi statisch oder dynamische Belastung) den Überstand hinreichend und in den praktisch vorgefundenen Parameterbereichen eindeutig beschreiben können. Das analytische Modell berücksichtigt vorzugsweise den Einfluss der Lagerschalenform (Durchmesser, Banddicke, Breite, Löcher, Nuten, Nocken, Spreizung, Schieflage, Fehlstellen des Lagerrückens), des Lagerschalenmaterials (Lagerrücken, Gleitschichten) und deren prozesstechnische Vorbehandlung. Im Falle der Berücksichtigung von empirischen Daten kann es zur eindeutigen Ermittlung des Überstands notwendig sein, entsprechend dem zugrunde gelegten Modell an der zu prüfenden Lagerschale weitere Parameter, die nicht allein die Formänderung betreffen, messtechnisch für die einzelne Lagerschale oder aufgrund von Stichproben für eine Serie von Lagerschalen zu ermitteln. Solche Messgrößen können sein: Spreizung, Schieflage, Topographie der Teilflächen, Topographie des Lagerrückens, Oberflächenrauhigkeit, Elastizitätsmodul, Härte, Wanddicke, Lagerschalenbreite.

Vorzugsweise werden ein oder mehrere Prüfkräfte direkt auf ein oder mehrere Lagerungspunkte beaufschlagt oder werden ein oder mehrere Lagerungspunkte verfahren. Die Beaufschlagung von Prüfkräften oder das Steuern eines Verschiebungswegs von Lagerungspunkten kann zur Verformung der Lagerschale dienen, um aus der Verformung den Überstand zu bestimmen. Andererseits kann mit verfahrbaren Lagerungspunkten eine Ausgangskonfiguration der Lagerschale eingestellt werden, auf welche die Prüfkräfte aufgebracht werden.

Dazu werden vorzugsweise eine oder mehrere Lagerungspunkte in radialer Richtung im Koordinatensystem der Lagerschale verfahren. Auf diese Weise lässt sich vorzugsweise eine Spreizung der Lagerschale vor dem Aufbringen von Prüfkräften auf die Lagerschale aufheben.

Vorzugsweise umfasst das Aufbringen der Prüfkräfte das Aufbringen einer Prüfkraft auf den Scheitelpunkt der Lagerschale, um ein einfaches und reproduzierbares Verfahren zu realisieren.

Vorzugsweise werden die eine oder mehreren Prüfkräfte flächig auf die Lagerschale aufgebracht, so dass eine elastische Verformung der Lagerschale gewährleistet ist.

In einer bevorzugten Ausführungsform erfolgt die Messung der Formänderung der Lagerschale berührungslos an zwei Messpunkten auf dem Lagerrücken an Punkten, die jeweils etwa 30° von der entsprechenden Teilfläche beabstandet sind. Hierdurch kann durch Mittelwertbildung an den beiden Messpunkten eine unsymmetrische Ausbildung der Lagerschale, beispielsweise durch Löcher, Nocken, usw., kompensiert und die Genauigkeit der Überstandsbestimmung verbessert werden.

Vorzugsweise wird in einem zusätzlichen Verfahrensschritt, der vor dem Aufbringen der Prüfkräfte auszuführen ist, eine Referenzmessung durchgeführt, die zur Bestimmung einer Wegdifferenz eines oder mehrerer Messpunkte bei der Verformung herangezogen wird. Damit ist sichergestellt, dass sich die gemessene Verformung auf die zu vermessende Lagerschale bezieht, wodurch die Genauigkeit der Überstandsbestimmung verbessert werden kann.

Vorzugsweise wird eine Spreizung der Lagerschale durch seitliche Zwangskräfte an den Teilflächen vor dem Messen der Verformung aufgehoben, wodurch die Genauigkeit und Reproduzierbarkeit der Überstandsbestimmung verbessert werden kann. Vorzugsweise wird die zu vermessende Lagerschale dazu an den beiden Teilflächen eingespannt.

Die obige Beschreibung des Verfahrens enthält Merkmale, die auf die Vorrichtung zum Ausführen der Überstandsbestimmung übertragbar sind. Insbesondere weist die Vorrichtung, die zum Ausführen des obigen Verfahrens geeignet ist, eine Spannvorrichtung, die zum Einspannen einer Lagerschale an einem oder mehreren Lagerungspunkten oder Bereichen geeignet ist, eine oder mehrere Verformungseinrichtungen, die zum Aufbringen einer oder mehrerer Prüfkräfte auf zumindest einen Punkt oder Bereich der Lagerschale geeignet sind, eine oder mehrere Messvorrichtungen, welche die radiale Verformung der Lagerschale an einem oder mehreren Punkten, Bereichen oder Abschnitten messen können, wenn eine oder mehrere Prüfkräfte von der Verformungseinrichtung so auf zumindest einen Punkt der Lagerschale aufgebracht werden, dass die Lagerschale radial elastisch verformt wird, und eine Einrichtung zum Bestimmen des Überstands auf, die aus der gemessenen Verformung der Lagerschale den Überstand der Lagerschale bestimmen kann. Die hier beschriebene Vorrichtung kann das oben beschriebene Verfahren und die damit verbundenen Vorteile realisieren.

Vorzugsweise sind dazu ein oder mehrere Lagerungspunkte der Spannvorrichtung verfahrbar und/oder lassen sich mit Prüfkräften beaufschlagen. Aufgrund des näherungsweise halbkreisförmigen Querschnitts der Lagerschale lassen sich die angesprochenen Lagerungspunkte vorzugsweise in radialer Richtung im Koordinatensystem der Lagerschale verfahren. Damit lässt sich, sofern zwei verfahrbare Lagerungspunkte die Lagerschale an den Teilflächen einspannen, die Spreizung der Lagerschale aufheben.

Um eines der obigen bevorzugten Verfahren zu realisieren, ist die Verformungseinrichtung vorzugsweise so vorgesehen, dass eine Prüfkraft auf den Scheitelpunkt der Lagerschale aufgebracht werden kann.

Es ist ferner bevorzugt, dass die Verformungseinrichtung elektrische Lineareinheiten und/oder Piezosteller aufweist, um die Verformung gezielt und im elastischen Bereich durchführen zu können.

Aus demselben Grund und um die Lagerschale so wenig wie möglich zu beanspruchen, werden eine oder mehrere Prüfkräfte vorzugsweise flächig auf die Lagerschale aufgebracht.

Vorzugsweise weist die Messvorrichtung einen oder mehrere optische Sensoren auf, um dadurch die Verformung der Lagerschale berührungslos messen zu können und die Lagerschale während der Überstandsbestimmung so wenig wie möglich zu beanspruchen.

In einer bevorzugten Ausführungsform weist die Messvorrichtung zwei berührungslose Abstandssensoren auf, welche die Formänderung der Lagerschale auf dem Lagerrücken in Punkten etwa 30° von der jeweiligen Teilfläche beim Aufbringen der Prüfkräfte erfassen können. Hierdurch kann durch Mittelwertbifdung an den beiden Messpunkten eine unsymmetrische Ausbildung der Lagerschale, beispielsweise durch Löcher, Nocken, usw., kompensiert und die Genauigkeit der Überstandsbestimmung verbessert werden.

Vorzugsweise umfasst die Einrichtung zum Bestimmen des Überstands eine Recheneinheit, die den Überstand unter Ausnutzung eines der oben beschriebenen Formänderungsmodelle bestimmt. Hierdurch lässt sich die Anordnung für verschiedene Lagerschalentypen mit geringem Konfigurationsaufwand einsetzen.

### KURZE BESCHREIBUNG DER ZEICHNUNGEN

- Fig. 1: zeigt eine zur Vermessung mit dem beschriebenen Verfahren und der beschriebenen Vorrichtung geeignete Lagerschale;
- Fig. 2: illustriert den Begriff der "Spreizung" der Lagerschale;
- Fig. 3: zeigt ein Verfahren zur Überstandsmessung gemäß dem Stand der Technik unter Verwendung eines Messgesenks;
- Fig. 4: zeigt eine Ausführungsform der Vorrichtung zur Bestimmung des Überstands und stellt das Verfahren anschaulich dar;
- Fig. 5: zeigt eine simulierte Verformung einer Lagerschale unter Einwirkung einer Kraft auf den Scheitelpunkt der Lagerschale.
- Fig. 6: zeigt Simulationsergebnisse für die maximale Verformung der Lagerschale.

### WEGE ZUR AUSFÜHRUNG DER ERFINDUNG

Fig. 4 zeigt eine Ausführungsform der Messvorrichtung zur Bestimmung des Überstands. Die Messvorrichtung besteht aus einer Spannvorrichtung mit zwei Spannblöcken 30. Damit wird die Lagerschale 1 an mehreren Punkten oder Abschnitten (im Folgenden als Lagerungspunkte bezeichnet) eingespannt. Die einzelnen Lagerungspunkte können je nach Ausgestaltung der Prüfeinrichtung mit Kräften beaufschlagt oder weggesteuert, vorzugsweise in radialer Richtung im Koordinatensystem der Lagerschale, verfahren werden. In der vorliegenden Ausführungsform ist die Lagerschale 1 an den beiden Teilflächen 10 eingespannt.

Mit den verfahrbaren Spannblöcken 30 wird vorzugsweise die Spreizung der Lagerschale 1 aufgehoben. Danach wird eine Prüfkraft F oder eine weggesteuerte Zwangskraft x mittels eines Stempels 32 auf den Scheitel der Lagerschale 1 aufgebracht. Hierbei kann die Krafteinleitung flächig am Lagerrücken oder an den Teilflächen über Stellelemente (vorzugsweise elektrische Lineareinheiten oder Piezosteller) erfolgen, so dass eine plastische Verformung bei der Krafteinleitung vermieden wird.

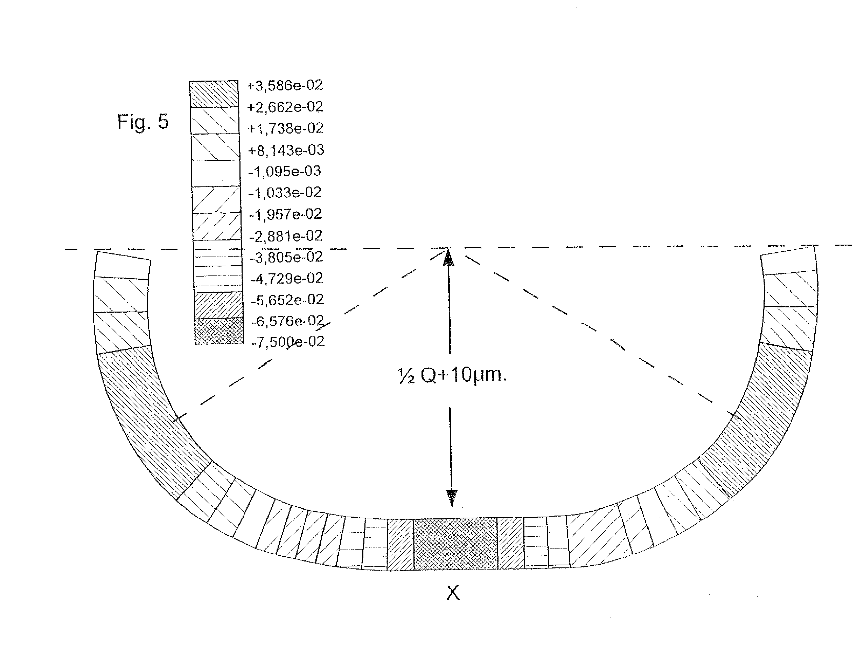

In Fig. 5 ist eine simulierte Verformung der Lagerschale 1 unter Einwirkung der Kraft F durch den Stempel 32 gezeigt. Die Verformung wurde weggesteuert, wobei der Scheitel um 10 µm auf 1/2Q+10 µm verschoben wurde. In Fig. 5 ist die radiale Verformung der Lagerschale 1 schattiert und überhöht dargestellt.

Die Messvorrichtung führt in definierten Richtungen relativ zum Zentrum der Lagerschale 1 (vorzugsweise in radialer Richtung zur Lagerschale) an mehreren Punkten oder Sektoren der Lagerschale absolute Abstandsmessungen oder Messungen der Abstandsänderung im Verlauf der aufgebrachten Prüfkräfte mit Hilfe von Sensoren 31 durch. Die Sensoren 31 können starr an der Messvorrichtung oder beweglich mit einzelnen Lagerungspunkten 30 verbunden sein. Messpunkte können sowohl auf der Gleitfläche (Innendurchmesser) als auch dem Lagerrücken (Außendurchmesser) der Lagerschale 1 vorgesehen sein. Als Sensoren 31 kommen taktile oder berührungslose Abstandssensoren zum Einsatz. Für die flächenhafte Erfassung der Abstände in ganzen Sektoren können vorzugsweise optische Sensoren nach dem Triangulationsprinzip eingesetzt werden. In der gezeigten und bevorzugten Ausführungsform sind zwei berührungslose Abstandssensoren 31 vorgesehen, die auf dem Lagerrücken in Punkten 30° von jeder Teilfläche 10 die Formänderung unter Last erfassen.

Im einfachsten Fall wird eine Referenzmessung des Abstands zum Sensor 31 durchgeführt, nachdem die Spreizung durch seitliche Zwangskräfte an den Teilflächen 10 aufgehoben wurde. Danach wird eine Vertikalkraft F, x auf den Scheitel aufgebracht, so dass der Abstand des Scheitels das Q-Maß mit einem vorgegebenen Abstandszuschlag erreicht (weggesteuerte Last), und eine erneute Abstandsmessung zu den Sensoren 31 durchgeführt. Dabei wird wiederum der Abstand in radialer Richtung der Lagerschale in den Punkten 30° von der Teilfläche 10 bestimmt. Die Wegdifferenz ist die radiale Formänderung unter vertikaler (weggesteuerter) Last. Diese Differenz ist die Haupteingangsgröße zur automatischen, rechnerischen Ermittlung des Überstands.

Vorzugsweise wird der Mittelwert aus beiden Messpunkten (rechte Seite und linke Seite) ausgewertet, um die unsymmetrische Verformung aufgrund von Lagerschalen mit unsymmetrisch angebrachten Löchern, Nocken und ähnliches zu verringern.

Die Verrechnung dieser und weiterer Eingangsgrößen erfolgt vorzugsweise mit Hilfe eines Prozessrechners, im einfachsten Fall mittels eines PCs.

Die Messeinrichtung kann weitere Sensoren umfassen, die in separaten Messungen oder während der Formänderung unter Last folgende Größen - gegebenenfalls nur stichprobenartig - erfassen: Spreizung, Topographie des Lagerrückens, Topographie der Teilfläche, Oberflächenrauhigkeit, Härte, Wanddicke, Makroform der Gleitfläche.

Informationen über andere Eingangsgrößen (z.B. prozesstechnische Vorbehandlung) können aus anderen Systemen übertragen und zur rechnerischen Korrektur als Eingangsgrößen herangezogen werden.

Eine mögliche Realisierung des oben beschriebenen Messverfahrens wurde mit Hilfe der Methode der Finiten Elemente simuliert.

Die simulierte Anordnung besteht aus einem Prisma, das als Auflage für den Scheitel der Lagerschale dient. Die Lagerschale wird an ihren Teilflächen seitlich gehalten und an beiden Teilflächen mit einer Prüfkraft belastet. Gleichwertig kann die vertikale Prüfkraft auch durch Belastung über das Auflageprisma aufgebracht werden. Der simulierte Ablauf sieht vor, dass zunächst die vorliegende Spreizung der Lagerschale durch waagerecht wirkende Kräfte auf den Lagerrücken nahe den Teilflächen aufgehoben wird. Die Teilflächen werden auf das bekannte Sollmaß des Außendurchmessers (Q-Maß) zusammengedrückt. Der Scheitel ist zu diesem Zeitpunkt von senkrechten Kräften entlastet. Nun erfolgt die erste Messung des Abstands des Lagerrückensegments nahe des Sektors 30° von der Teilfläche. Es wird der Abstand in radialer Richtung der Achse des Lagers zum Sensor bestimmt (Referenzmessung vor der Verformung). Nun wird das Auflageprisma verfahren, in Richtung der Teilflächen der Lagerschale, bis ein vorgegebener Abstand zu der Abstützungsebene der Teilflächen erreicht wird. Dieser Abstand wurde in der Simulation zu Q-Maß/2 + 10 µm gewählt. Dies führt zu einer radialen Abweichung der Lagerschalenform. Es erfolgt nun eine zweite Messung des radialen Abstands im Sektor 30° zur Teilfläche. Die Differenz der beiden Messungen ergibt die nach Aufhebung der Spreizung erfolgte maximale Formabweichung in radialer Richtung. Mit Kenntnis der Spreizung, die in einer separaten oder simultanen Messung taktil oder berührungslos bestimmt wird, kann ihr Einfluss auf die Differenzmessung rechnerisch korrigiert werden.

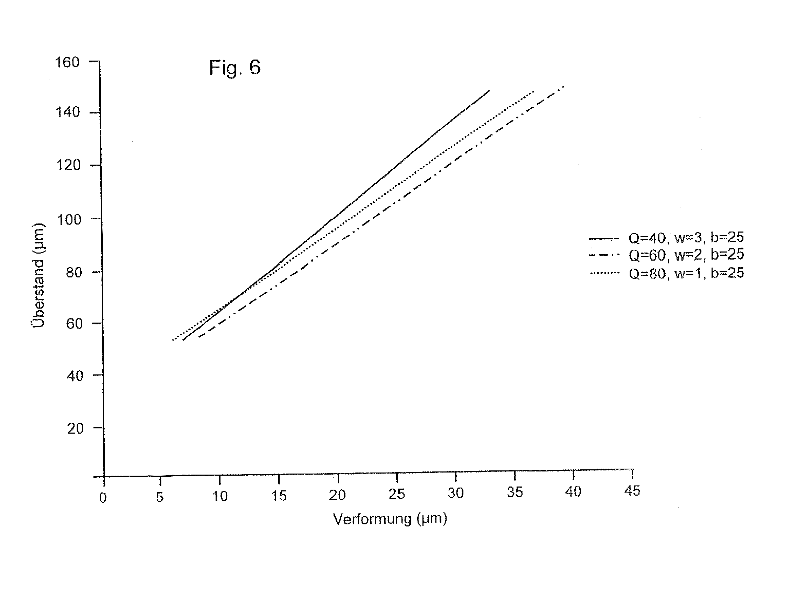

Fig. 6 ist eine Darstellung der weggesteuerten Verformung auf 1/2Q+10 µm. Darin sind Simulationsergebnisse für die maximale Verformung der Lagerschale ("Verformung", Abszisse) unter weggesteuerter Last mit verschiedenen Parametern des Durchmessers Q, der Wanddicke w und der Lagerschalenbreite b bei vorgegebenem Überstand ("Überstand", Ordinate) enthalten. Wie es in Fig. 6 gezeigt ist, ist ohne vorliegende Spreizung die obige Differenz proportional zum Überstand. Die Differenzmessung ist geringfügig abhängig vom Vorhandensein von Löchern, Nuten, Nocken.

## Patentansprüche

1. Verfahren zur Überstandsbestimmung an Lagerschalen (1), mit den folgenden Schritten:
a) Einspannen einer Lagerschale (1) an mehreren Lagerungspunkten;
b) Aufbringen einer oder mehrerer Prüfkräfte (F, x) auf zumindest einen Punkt der Lagerschale (1), so dass die Lagerschale (1) radial elastisch verformt wird;
c) Messen der radialen Verformung der Lagerschale an einem oder mehreren Messpunkten der Lagerschale (1);
d) Bestimmen des Überstands (S_{N}) aus der gemessenen Verformung.

2. Verfahren nach Anspruch 1, **dadurch gekennzeichnet, dass** im Schritt b) Prüfkräfte (F, x) gemäß einem zeitlich gesteuerten Kräfteverlauf aufgebracht werden und im Schritt c) der zeitliche Verlauf der Verformung gemessen wird.

3. Verfahren nach Anspruch 1 oder 2, **dadurch gekennzeichnet, dass** der im Schritt d) zu bestimmende Überstand (S_{N}) unter Ausnutzung eines Formänderungsmodells bestimmt wird, das bevorzugt vor dem Schritt a) aus Materialkennwerten und einem analytischen Modell, empirisch anhand eine Serie von Meisterschalen, adaptiv aus Verglsichsrnessungen an Produktionsteilen oder aus einer Mischung davon ermittelt wird.

4. Verfahren nach einem der vorhergehenden Ansprüche, **dadurch gekennzeichnet, dass** ein oder mehrere Lagerungspunkte vor dem Schritt c) mit Prüfkräften beaufschlagt oder weggesteuert werden, wobei bevorzugt der eine oder die mehreren Lagerungspunkte in radialer Richtung im Koordinatensystem der Lagerschale (1) verfahren werden.

5. Verfahren nach einem der Ansprüche 1 bis 4, **dadurch gekennzeichnet, dass** im Schritt b) eine Prüfkraft (F, x) auf den Scheitelpunkt der Lagerschale (1) aufgebracht wird und/oder eine oder mehrere Prüfkräfte (F, x) flächig auf die Lagerschale (1) aufgebracht werden.

6. Verfahren nach einem der Ansprüche 1 bis 5, **dadurch gekennzeichnet, dass** die Lagerschale zwei Teilflächen (10) und einen Lagerrücken (12) aufweist, und die Messung der Formänderung der Lagerschale (1) im Schritt c) berührungslos an zwei Messpunkten auf dem Lagerrücken (12) der Lagerschale (1) an Punkten etwa 30° von der jeweiligen Teilfläche (10) durchgeführt wird.

7. Verfahren nach einem der vorhergehenden Ansprüche, **dadurch gekennzeichnet, dass** in einem zusätzlichen Schritt, der vor dem Schritt b) auszuführen ist, eine Referenzmessung durchgeführt wird, die zur Bestimmung einer Wegdifferenz einer oder mehrere Messpunkte bei der Verformung herangezogen wird.

8. Verfahren nach einem der vorhergehenden Ansprüche, **dadurch gekennzeichnet, dass** vor dem Schritt c) eine Spreizung der Lagerschale (1) durch seitliche Zwangskräfte an Teilflächen (10) der Lagerschale aufgehoben wird.

9. Vorrichtung zur Überstandsbestimmung an Lagerschalen (1) mit einer Spannvorrichtung (30), die zum Einspannen einer Lagerschale (1) an einem oder mehreren Lagerungspunkten eingerichtet ist,
einer oder mehreren Verformungseinrichtungen, die zum Aufbringen einer oder mehrerer Prüfkräfte (F, x) auf zumindest einen Punkt der Lagerschale (1) eingerichtet sind,
einer oder mehreren Messvorrichtungen (31), die zum Messen der radialen Verformung der Lagerschale an einem oder mehreren Punkten eingerichtet sind, wenn eine oder mehrere Prüfkräfte (F, x) von der Verformungseinrichtung so auf zumindest einen Punkt der Lagerschale (1) aufgebracht werden, dass die Lagerschale (1) radial elastisch verformt wird, und
einer Einrichtung zum Bestimmen des Überstands, die dazu eingerichtet ist, aus der gemessenen Verformung der Lagerschale (1) den Überstand der Lagerschale zu bestimmen.

10. Vorrichtung nach Anspruch 9, **dadurch gekennzeichnet, dass** mittels der Verformungseinrichtung ein oder mehrere Lagerungspunkte der Spannvorrichtung (30) mit Prüfkräften (F, x) beaufschlagt oder weggesteuert werden können, wobei bevorzugt der eine oder die mehreren Lagerungspunkte in radialer Richtung im Koordinatensystem der Lagerschale (1) verfahrbar sind.

11. Vorrichtung nach einem der Ansprüche 9 oder 10, **dadurch gekennzeichnet, dass** mittels der Verformungseinrichtung (32) eine Prüfkraft auf den Scheitelpunkt der Lagerschale (1) aufgebracht werden kann und/oder eine oder mehrere Prüfkräfte (F, x) flächig auf die Lagerschale (1) aufgebracht werden können.

12. Vorrichtung nach einem der Ansprüche 9 bis 11, **dadurch gekennzeichnet, dass** die Verformungseinrichtung elektrische Lineareinheiten und/oder Piezosteller aufweist.

13. Vorrichtung nach einem der Ansprüche 9 bis 12, **dadurch gekennzeichnet, dass** die Messvorrichtung (31) einen oder mehrere optische Sensoren aufweist.

14. Vorrichtung nach einem der Ansprüche 9 bis 13, **dadurch gekennzeichnet, dass** die Lagerschale zwei Teilflächen (10) und einen Lagerrücken (12) aufweist, und die Messvorrichtung (31) zwei berührungslose Abstandssensoren umfasst, welche die Formänderung der Lagerschale (1) auf dem Lagerrücken (12) in Punkten etwa 30° von der jeweiligen Teilfläche (10) beim Aufbringen der Prüfkräfte (F, x) erfassen können.

15. Vorrichtung nach einem der Ansprüche 10 bis 14, **dadurch gekennzeichnet, dass** die Einrichtung zum Bestimmen des Überstands (S_{N}) eine Recheneinheit umfasst, die den Überstand(S_{N}) unter Ausnutzung eines Formänderungsmodells bestimmt, das bevorzugt ein Modell aus Materialkennwerten und einem analytischen Modell, ein anhand einer Serie von Meisterschalen empirisch ermitteltes Modell, ein adaptiv aus Vergleichsmessungen an Produktionsteilen ermitteltes Modell oder eine Mischform davon ist.

## Claims

1. Method for determining the protrusion of bearing shells (1) having the following steps:
a) clamping a bearing, shell (1) at several bearing points;
b) applying one or more test forces (F, x) to at least one point of the bearing shell (1), so that the bearing shell (1) is elastically deformed radially;
c) measuring the radial deformation of the bearing shell at one or more measuring points of the bearing shell (1);
d) determining the protrusion (S_{N}) from the measured deformation.

2. Method according to claim 1, **characterised in that** in step b) test forces (F, x) are applied according to a chronologically controlled force sequence and in step c) the chronological sequence of the deformation is measured.

3. Method according to claim 1 or 2, **characterised in that** the protrusion (S_{N}) to be determined in step d) is determined using a shape change model which is determined preferably before step a) from material characteristics and an analytical model, empirically based on a series of master shells, adaptively from comparative measurements of production parts or from a mixture thereof.

4. Method according to one of the preceding claims, **characterised in that** one or more bearing points are exposed to test forces or moved in a displacement-controlled manner before step c), wherein the one or more bearing points are preferably displaced in the radial direction in the coordinate system of the bearing shell (1).

5. Method according to one of claims 1 to 4, **characterised in that** in step b) a test force (F, x) is applied to the apex point of the bearing shell (1) and/or one or more test forces (F, x) are applied to the bearing shell (1) over an area.

6. Method according to one of claims 1 to 5, **characterised in that** the bearing shell has two parting faces (10) and a bearing backing (12), and the measurement of the shape change of the bearing shell (1) in step c) is carried out in a contact-free manner at two measuring points on the bearing backing (12) of the bearing shell (1) at points approximately 30° from the respective parting face (10).

7. Method according to one of the preceding claims, **characterised in that** in an additional step, which is to be executed before step b), a reference measurement is carried out which is used for determining a displacement difference for one or more measuring points during deformation.

8. Method according to one of the preceding claims, **characterised in that** before step c) a spread of the bearing shell (1) is cancelled out by lateral constraining forces at parting faces (10) of the bearing shell.

9. Device for determining the protrusion of bearing shells (1) having a clamping device (30), which is equipped for clamping a bearing shell (1) at one or more bearing points, one or more deforming devices which are equipped for applying one or more test forces (F, x) to at least one point of the bearing shell (1), one or more measuring devices (31) which are equipped for measuring the radial deformation of the bearing shell at one or more points when one or more test forces (F, x) are applied by the deforming device to at least one point of the bearing shell (1) so that the bearing shell (1) is elastically deformed radially, and a device for determining the protrusion which is equipped to determine the protrusion of the bearing shell from the measured deformation of the bearing shell (1).

10. Device according to claim 9, **characterised in that** one or more bearing points of the clamping device (30) may be exposed to test forces (F, x) or moved in a displacement-controlled manner by means of the deforming device, wherein the one or more bearing points can preferably be displaced in the radial direction in the coordinate system of the bearing shell (1).

11. Device according to one of claims 9 or 10, **characterised in that** a test force may be applied to the apex point of the bearing shell (1) by means of the deforming device (32) and/or one or more test forces (F, x) may be applied to the bearing shell (1) over an area.

12. Device according to one of claims 9 to 11, **characterised in that** the deforming device has electrical linear units and/or piezoelectric actuators.

13. Device according to one of claims 9 to 12, **characterised in that** the measuring device (31) has one or more optical sensors.

14. Device according to one of claims 9 to 13, **characterised in that** the bearing shell has two parting faces (10) and a bearing backing (12), and the measuring device (31) comprises two contact-free distance sensors which are able to detect the shape change of the bearing shell (1) on the bearing backing (12) at points approximately 30° from the respective parting face (10) when the test forces (F, x) are applied.

15. Device according to one of claims 10 to 14, **characterised in that** the device for determining the protrusion (S_{N}) comprises a computing unit which determines the protrusion (S_{N}) using a shape change model which is preferably a model of material characteristics and an analytical model, a model empirically determined from a series of master shells, a model determined adaptively from comparative measurements of production parts or a mixed form thereof.

## Revendications

1. Procédé permettant de déterminer le débord sur des coquilles de coussinet (1), comportant les étapes suivantes :
a) blocage d'une coquille de coussinet (1) en plusieurs points de montage ;
b) application d'une ou de plusieurs forces d'essai (F, x) sur au moins un point de la coquille de coussinet (1), de telle sorte que la coquille de coussinet (1) se déforme élastiquement dans le sens radial ;
c) mesure de la déformation radiale de la coquille de coussinet en un ou plusieurs points de mesure de la coquille de coussinet (1) ;
d) détermination du débord (S_{N}) à partir de la déformation mesurée.

2. Procédé selon la revendication 1, **caractérisé en ce que** dans l'étape b) les forces d'essai (F, x) sont appliquées selon une courbe de force commandée dans le temps et dans l'étape c) est mesurée la courbe de la déformation en fonction du temps.

3. Procédé selon la revendication 1 ou 2, **caractérisé en ce que** le débord (S_{N}) à déterminer dans l'étape d) est déterminé moyennant l'utilisation d'un modèle de variation de forme, qui est déterminé, de préférence, avant l'étape a) à partir de grandeurs caractéristiques du matériau et d'un modèle analytique, de manière empirique à l'appui d'une série de coquilles auxiliaires, de manière adaptive à l'appui de mesures comparatives sur des pièces de production ou à partir d'une combinaison de ceux-ci.

4. Procédé selon l'une quelconque des revendications précédentes, **caractérisé en ce qu'**un ou plusieurs points de montage sont sollicités ou commandés en déplacement par des forces d'essai avant l'étape c), de préférence, l'un ou la pluralité des points de montage pouvant être déplacés dans le sens radial dans le système de coordonnées de la coquille de coussinet (1).

5. Procédé selon l'une quelconque des revendications 1 à 4, **caractérisé en ce que** dans l'étape b), une force d'essai (F, x) est appliquée sur le sommet de la coquille de coussinet (1) et/ou une ou plusieurs forces d'essai (F, x) sont appliquées sur la surface de la coquille de coussinet (1).

6. Procédé selon l'une quelconque des revendications 1 à 5, **caractérisé en ce que** la coquille de coussinet comporte deux surfaces partielles (10) et une face arrière (12), et la mesure de la variation de forme de la coquille de coussinet (1) pendant l'étape c) est effectuée sans contact en deux points de mesure sur la face arrière (12) de la coquille de coussinet (1) en des points à environ 30° de la surface partielle (10) concernée.

7. Procédé selon l'une quelconque des revendications précédentes, **caractérisé en ce qu'**au cours d'une étape supplémentaire, mise en oeuvre avant l'étape b), est effectuée une mesure de référence qui est prise en compte pour déterminer une différence de trajectoire d'un ou de plusieurs points de mesure lors de la déformation.

8. Procédé selon l'une quelconque des revendications précédentes, **caractérisé en ce qu'**avant l'étape c), un élargissement de la coquille de coussinet (1) est supprimé sous l'effet de contraintes latérales sur des surfaces partielles (10) de la coquille de coussinet.

9. Dispositif permettant de déterminer un débord sur des coquilles de coussinet (1), comportant
un dispositif de serrage (30), qui est configuré pour bloquer une coquille de coussinet (1) en un ou plusieurs points de montage,
un ou plusieurs dispositifs de déformation, qui sont configurés pour appliquer une ou plusieurs forces d'essai (F, x) sur au moins un point de la coquille de coussinet (1),
un ou plusieurs dispositifs de mesure (31) qui sont configurés pour mesurer la déformation radiale de la coquille de coussinet en un ou plusieurs points, lorsqu'une ou plusieurs forces d'essai (F, x) sont appliquées par le dispositif de déformation sur au moins un point de la coquille de coussinet (1) de telle sorte que la coquille de coussinet (1) se déforme élastiquement dans le sens radial, et
un dispositif pour déterminer le débord, qui est configuré pour déterminer le débord de la coquille de coussinet (1) à partir de la déformation mesurée de la coquille de coussinet.

10. Dispositif selon la revendication 9, **caractérisé en ce qu'**au moyen du dispositif de déformation, un ou plusieurs points de montage du dispositif de serrage (30) sont sollicités ou commandés en déplacement par des forces d'essai (F, x), de préférence, l'un ou la pluralité des points de montage pouvant être déplacés dans le sens radial dans le système de coordonnées de la coquille de coussinet (1).

11. Dispositif selon la revendication 9 ou 10, **caractérisé en ce qu'**au moyen du dispositif de déformation (32) une force d'essai peut être appliquée sur le sommet de la coquille de coussinet (1) et/ou une ou plusieurs forces d'essai (F, x) peuvent être appliquées sur la surface de la coquille de coussinet (1).

12. Dispositif selon l'une quelconque des revendications 9 à 11, **caractérisé en ce que** le dispositif de déformation comporte des unités linéaires électriques et/ou des actionneurs piézoélectriques.

13. Dispositif selon l'une quelconque des revendications 9 à 12, **caractérisé en ce que** le dispositif de mesure (31) comporte un ou plusieurs capteurs optiques.

14. Dispositif selon l'une quelconque des revendications 9 à 13, **caractérisé en ce que** la coquille de coussinet comporte deux surfaces partielles (10) et une face arrière (12), et le dispositif de mesure (31) comporte deux capteurs de distance fonctionnant sans contact qui, au moment de l'application des forces d'essai (F, x), peuvent détecter la variation de forme de la coquille de coussinet (1) sur la face arrière (12) en des points à environ 30° de la surface partielle (10) concernée.

15. Dispositif selon l'une quelconque des revendications 10 à 14, **caractérisé en ce que** le dispositif pour déterminer le débord (S_{N}) comporte une unité de calcul, qui détermine le débord (S_{N}) moyennant l'utilisation d'un modèle de variation de forme, qui est, de préférence, un modèle issu de grandeurs caractéristiques du matériau et un modèle analytique, un modèle déterminé de manière empirique à l'appui d'une série de coquilles auxiliaires, un modèle déterminé de manière adaptive à partir de mesures comparatives sur des pièces de production ou une forme combinée de ceux-ci.
